# FASCICULE DE BREVET EUROPEEN

(11) **EP 0 678 484 B1**
(45) Date de publication et mention de la délivrance du brevet: **30.06.1999**
(21) Numéro de dépôt: 95400877.7
(22) Date de dépôt: 20.04.1995
(51) Int. Cl.: C03C 17/36

(54) **Substrats en verre revêtus d'un empilement de couches minces à propriétés de réflexion dans l'infrarouge et/ou dans le domaine du rayonnement solaire**
Mit einem Dünnschichtstapel beschichtete Glassubstrate mit reflektierenden Eigenschaften für Infrarot und/oder Sonnenstrahlung
Glass substrates coated with a stack of thin layers having reflective properties for infrared and/or solar radiation

(30) Priorité: 21.04.1994 FR 9404810
(43) Date de publication de la demande: 25.10.1995
(73) Titulaire: SAINT-GOBAIN VITRAGE, 92400 Courbevoie (FR)
(72) Inventeur: Lerbet, François, F-75015 Paris (FR); Rondeau, Véronique, F-93700 Drancy (FR); Guiselin, Olivier, F-75016 Paris (FR)
(74) Mandataire: Renous Chan, Véronique

(56) Documents cités:
- EP-A- 0 303 109
- EP-A- 0 611 213
- DE-A- 3 543 178
- US-A- 4 010 304
- RESEARCH DISCLOSURE, no. 336, Avril 1992 HAVANT GB, page 262 'Improving stability of heat mirror glazing composites'
- CHEMICAL ABSTRACTS, vol. 112, no. 10, 5 Mars 1990 Columbus, Ohio, US; abstract no. 82819, page 346; & JP-A-01 188 446 (NIPPON SHEET GLASS CO. LTD.) 27 Juillet 1989

## Description

L'invention concerne les substrats transparents, notamment en verre, revêtus d'un empilement de couches minces comprenant au moins une couche métallique pouvant agir sur le rayonnement solaire et sur le rayonnement infra-rouge de grande longueur d'onde.

L'invention concerne également l'utilisation de tels substrats pour fabriquer des vitrages d'isolation thermique et/ou de protection solaire. Ceux-ci sont destinés aussi bien à équiper des bâtiments que des véhicules, en vue notamment de diminuer l'effort de climatisation et/ou de réduire une surchauffe excessive entraînée par l'importance toujours croîssante des surfaces vitrées dans l'habitacle.

Un type d'empilement de couches minces connu destiné à conférer au substrat des propriétés notamment de basse-émissivité est constitué d'au moins une couche métallique telle qu'une couche d'argent disposée entre deux couches de matériau diélectrique telles que des couches d'oxyde métallique. Cet empilement est généralement obtenu par une succession de dépôts effectués par une technique utilisant le vide, comme la pulvérisation cathodique éventuellement assistée par champ magnétique.

Si la couche d'argent détermine essentiellement les performances thermiques, notamment en terme d'émissivité du vitrage revêtu, les couches de matériau diélectrique remplissent plusieurs rôles puisqu'elles agissent tout d'abord sur l'aspect optique du substrat de manière interférentielle. Elles permettent en outre de protéger la couche d'argent des aggressions chimiques et/ou mécaniques.

Il est ainsi connu de la demande de brevet européen EP-A-0 226 993 un empilement comportant une couche d'argent intercalée entre deux couches d'un matériau diélectrique constitué d'un oxyde mixte d'étain et de zinc. Cet empilement présente en outre des couches très minces dites d'accrochage en métal, notamment en cuivre, disposées à l'interface entre la couche d'argent et chacune des couches d'oxyde afin d'en augmenter l'adhérence mutuelle.

Par ailleurs, le brevet français FR-B-2 641 271 décrit un empilement où la couche d'argent est intercalée entre deux revêtements de matériau diélectrique, chacun de ces revêtements étant constitué d'une pluralité de couches d'oxyde métallique. Le revêtement sous-jacent à la couche d'argent se compose de trois couches d'oxyde superposées dont une couche d'oxyde d'étain, celle adjacente à la couche d'argent étant en oxyde de zinc et ayant d'après ce document un effet de protection de l'argent, notamment en le rendant moins vulnérable à l'attaque par l'oxygène. L'épaisseur de la couche de zinc doit rester faible, car selon ce brevet l'oxyde de zinc, peu résistant par ailleurs, risquerait, en trop forte épaisseur, de fragiliser l'ensemble de l'empilement.

Cependant, il ne s'agit pas seulement d'augmenter la durabilité de l'empilement en augmentant sa résistance aux corrosions de nature oxydante, chimique ou mécanique. L'objectif essentiel de ce type d'empilement demeure une optimisation de ses performances thermiques. Or, jusque-là, la solution la plus simple pour abaisser l'émissivité consistait à augmenter en conséquence l'épaisseur de la couche d'argent fonctionnelle, solution présentant deux inconvénients sur le plan optique et esthétique : d'une part, une augmentation de l'épaisseur entraîne une diminution de la transmission lumineuse du substrat-porteur, donc une diminution de sa transparence. D'autre part, elle s'accompagne d'une coloration beaucoup plus marquée de ce dernier, notamment en réflexion. Il était donc nécessaire d'établir un compromis, en privilégiant suivant les besoins soit plutôt les propriétés thermiques, soit plutôt les propriétés optiques de l'empilement.

Le but de l'invention est alors de mettre au point un nouveau type d'empilement à couche(s) fonctionnelle(s) qui présente à la fois des propriétés thermiques et optiques améliorées, et tout particulièrement à la fois une faible émissivité et une très haute transmission lumineuse.

La solution selon l'invention consiste en un substrat transparent, notamment en verre, muni d'un empilement de couches minces comportant au moins une couche à propriétés dans le domaine du rayonnement solaire et/ou dans le domaine de l'infra-rouge, notamment métallique et basse-émissive, qui se trouve disposée entre deux revêtements à base de matériau diélectrique. Ledit empilement est conçu, selon l'invention, de manière à ce que le revêtement sous-jacent à cette couche métallique comporte au moins un revêtement de "mouillage" comprenant une couche à base d'oxyde de zinc déposée sur une couche d'oxyde métallique répondant à la formule MₓO_{y} avec y/x ≥ 2,5, et qui peut-être notamment à base d'oxyde de niobium ou d'oxyde de tantale. Il peut aussi s'agir d'oxyde d'antimoine Sb₂O₅ ou d'oxyde de tungstène WO₃. Ladite couche à base d'oxyde de zinc est par ailleurs éventuellement surmontée d'une fine couche à base de métal tel que le zinc, le titane, le tantale, l'étain ou en alliage métallique tel que le nickel-chrome.

La couche métallique qui présente les propriétés dans le domaine du rayonnement solaire et/ou dans l'infra-rouge est dans le cadre de l'invention de préférence basse-émissive et à base d'argent. Elle est ci-après désignée sous le terme de "couche fonctionnelle".

De manière tout à fait surprenante, si l'on compare les performances, en termes de propriétés optiques et thermiques, d'un empilement tel qu'ainsi défini avec celles d'un empilement comportant une même couche fonctionnelle de même épaisseur mais dépourvu de la séquence constituée par la couche à base d'oxyde MₓO_{y} avec y/x ≥ 2,5 surmontée de la couche d'oxyde de zinc sous la couche fonctionnelle, on s'aperçoit que l'empilement selon l'invention confère à son substrat-porteur à la fois une très faible émissivité et une transmission lumineuse très élevée. Les auteurs de l'invention ont ainsi découvert que le choix de la nature des revêtements de matériau diélectrique, et tout particulièrement du revêtement sous-jacent à la couche fonctionnelle, avait une influence non seulement sur la durabilité chimique et/ou physique de l'empilement protégeant la couche fonctionnelle, mais également sur les propriétés intrinsèques de celle-ci, comme sa valeur d'émissivité ou sa transmission lumineuse.

Pour expliquer ce phénomène, on peut avancer l'hypothèse que la superposition d'un oxyde métallique à fort taux d'oxygène, comme l'oxyde de niobium ou de tantale et d'un oxyde de zinc créerait des conditions particulièrement propices à un bon mouillage, une bonne nucléation de la couche de métal fonctionnelle. Ladite couche s'en trouverait alors plus homogène, plus continue, ce qui expliquerait l'amélioration exceptionnelle de ses propriétés thermiques et optiques. Ce qui est tout-à-fait surprenant, c'est que l'on a ainsi montré que c'est une superposition de couches d'oxydes spécifiques et différents qui autorise un tel résultat. Cela signifierait que la croissance de la couche fonctionnelle sur la couche d'oxyde directement sous-jacente ne s'effectuerait pas indépendamment de la couche qui se trouve placée au-dessous de cette couche d'oxyde, et qu'il y aurait synergie, coopération entre les deux couches superposées pour offrir la surface de dépôt optimale pour la couche fonctionnelle. On aurait pu au contraire penser, au premier abord, que seule la couche destinée à être mise directement au contact de la couche d'argent pouvait avoir un quelconque rôle de « mouillage ». Or il a été vérifié que l'on ne pouvait obtenir une couche fonctionnelle de mêmes performances si on la déposait sur une seule couche d'oxyde directement déposée sur le substrat, qu'elle soit en oxyde de niobium, de tantale ou de zinc.

L'invention autorise ainsi l'obtention de valeurs d'émissivité plus faibles à épaisseur de couche fonctionnelle identique, ou même un niveau d'émissivité inchangé pour une épaisseur moindre.

Le grand avantage de l'invention réside dans le fait que cette optimisation de l'émissivité ne s'opère pas au détriment des performances optiques, notamment de la transmission lumineuse, et de la neutralité de la coloration, tout particulièrement en réflexion. Or c'est un point crucial aussi bien dans le domaine du bâtiment que de l'automobile par exemple. Précédemment, comme déjà mentionné, on n'obtenait des valeurs d'émissivité moindres qu'au prix d'une diminution de la transmission lumineuse et d'une coloration plus intense, en parallèle.

L'invention offre maintenant la possibilité de faire évoluer favorablement les deux caractéristiques à la fois, en abaissant l'émissivité et en augmentant la transmission lumineuse de l'empilement à épaisseur de couche fonctionnelle donnée.

De préférence, on dépose en outre sur la couche fonctionnelle une couche à base de métal du type niobium, titane, tantale, ou à base d'alliage métallique tel que le nickel-chrome, le tantale-chrome ou le niobium-chrome. Elle est dite "sacrificielle", car son rôle est de protéger la couche fonctionnelle de l'oxydation lors du dépôt ultérieur du matériau diélectrique au-dessus d'elle, dépôt effectué usuellement par une pulvérisation cathodique réactive, c'est-à-dire en présence d'oxygène. Dans le produit final, cette couche sacrificielle est donc, selon son épaisseur et les conditions de dépôt, partiellement ou complètement oxydée.

Le revêtement de matériau diélectrique qui se trouve au-dessus de la couche fonctionnelle comporte avantageusement au moins une couche à base d'oxyde d'étain, d'oxyde de tantale, d'oxyde de zinc, d'oxyde de niobium ou d'oxyde de titane, et/ou une couche de nitrure de silicium. On peut sélectionner une couche d'un oxyde ou même superposer deux couches d'oxydes en fonction de différents critères, qui peuvent être, par exemple, des critères de vitesse de dépôt des oxydes (l'oxyde d'étain se dépose très vite par pulvérisation cathodique) ou des critères de dureté particulière (l'oxyde de niobium et l'oxyde de tantale ainsi que le nitrure de silicium sont connus pour présenter une résistance, notamment mécanique, plus élevée que d'autres oxydes).

Concernant les épaisseurs des couches et revêtements de l'empilement selon l'invention, on préfère choisir une épaisseur de couche fonctionnelle comprise entre 7 et 13 nanomètres, de préférence comprise entre 9 et 12 nm. Cependant, si on vise moins un vitrage à très haute T_{L} et très basse-émissivité (plutôt pour pays froids), mais plutôt un vitrage peut-être un peu moins transparent mais plus anti-solaire (plutôt pour pays chauds), on peut bien sûr augmenter cette épaisseur de couche fonctionnelle jusqu'à 20 à 25 nm.

L'épaisseur globale de revêtement sous-jacent est avantageusement comprise entre 20 et 55 nanomètres, de préférence entre 30 et 45 nm.

L'épaisseur globale de revêtement au-dessus de la couche fonctionnelle est de même avantageusement comprise entre 20 et 55 nanomètres.

Avantageusement, la couche à base d'oxyde de zinc a une épaisseur comprise entre 3 et 40 nanomètres, de préférence entre 10 et 35 nanomètres, et notamment supérieure à 15 nanomètres.

Parallèlement, on choisit pour la couche à base d'oxyde de niobium ou de tantale de préférence une épaisseur comprise entre 3 et 40 nanomètres, notamment entre 10 et 35 nanomètres et plus particulièrement entre 5 et 25 nm, par exemple d'au moins 10 nanomètres.

Par ailleurs, l'épaisseur de la couche sacrificielle est de préférence choisie comprise entre 0,5 et 6 nanomètres, notamment entre 1 et 3 nanomètres . Pour la couche optionnelle métallique qui peut surmonter la couche d'oxyde de zinc, on choisit de préférence une gamme d'épaisseurs allant de 0,2 à 2 nanomètres.

L'invention a également pour objet les vitrages multiples du type isolants, bas-émissifs incorporant au moins un susbstrat revêtu d'un tel empilement. S'il s'agit d'un double-vitrage, l'empilement de couches est de préférence disposé en face 3 et/ou en face 2, tandis que s'il s'agit d'un triple-vitrage, on peut envisager d'avoir un empilement en face 3, en face 5 ou sur ces deux faces. (On rappelle que, conventionnellement, on numérote les faces à partir de l'extérieur, une fois le vitrage monté).

L'invention concerne aussi les vitrages feuilletés incorporant au moins un substrat revêtu d'un tel empilement de couches. Ils peuvent alors être avantageusement utilisés comme vitrages anti-solaires, et sont tout particulièrement utiles pour équiper des automobiles, vu leur haute transmission lumineuse. On peut aussi les utiliser en tant que vitrages chauffants, en prévoyant des amenées de courant pour les couches à propriétés dans l'infra-rouge du type argent. En effet, de telles couches, à faible émissivité, présentent également une forte conductivité électrique.

L'utilisation des substrats selon l'invention est ainsi très variée, puisqu'ils peuvent intervenir aussi bien dans la fabrication de vitrages multiples isolants que dans celle de vitrages feuilletés.

On peut ainsi fabriquer des double-vitrages dont l'émissivité est inférieure ou égale à 0,05, notamment inférieure à 0,045, et dont la transmission lumineuse reste néanmoins très élevée: celle-ci peut en effet être supérieure ou égale à 80 %. On peut souligner également que, en double-vitrage, on obtient en réflexion des valeurs de saturation c* dans le système de colorimétrie (L, a*, b*) d'au plus 5, ce qui se traduit par une couleur en réflexion très neutre, très esthétique.

Il va de soi que l'on peut aussi avantageusement appliquer l'invention à des substrats présentant non pas une mais plusieurs couches fonctionnelles, par exemple deux couches fonctionnelles intercalées entre trois revêtements à base de matériau diélectrique. On munit alors au moins une des couches fonctionnelles du revêtement de mouillage selon l'invention. On peut avoir ainsi un empilement du type Nb₂O₅/ZnO/Ag/Nb/ZnO/Nb₂O₅/ZnO/Ag/Nb/SnO₂. Les épaisseurs des couches d'argent et des épaisseurs globales des revêtements diélectriques de part et d'autre de celles-ci peuvent avantageusement être choisies dans les gammes préconisées dans la demande de brevet européen EP-O 638 528.

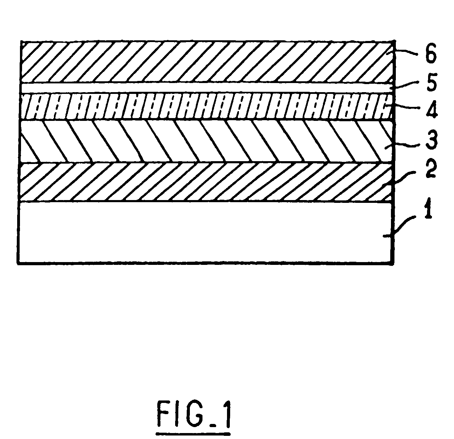

Les détails et caractéristiques avantageuses de l'invention vont maintenant ressortir des exemples suivants non limitatifs, à l'aide de la figure 1.

On précise que, dans ces exemples, les dépôts successifs de couches minces se font par une technique de pulvérisation cathodique assistée par champ magnétique, mais pourraient aussi être effectués par toute technique utilisant le vide et permettant une bonne maîtrise des épaisseurs de couche obtenues.

Les substrats sur lesquels sont déposés les empilements sont des substrats de verre silico-sodo-calcique de 4 millimètres d'épaisseur.

A la figure 1, le substrat en verre 1 est surmonté d'une couche d'oxyde de zinc 3 qui est disposée sur une couche d'oxyde de niobium 2. Puis il y a la couche fonctionnelle à base d'argent 4, surmontée d'une couche sacrificielle 5 à base de niobium, au-dessus de laquelle est disposée une couche d'oxyde d'étain 6. Cette figure est très schématique, et, pour plus de clarté, ne respecte pas les proportions quant aux épaisseurs des divers matériaux représentés.

L'installation de dépôt comprend au moins une chambre de pulvérisation munie de cathodes équipées de cibles en matériaux appropriés sous lesquels le substrat 1 passe successivement. Ces conditions de dépôt par chacune des couches sont les suivantes :
- la couche 4 à base d'argent est déposée à l'aide d'une cible en argent, sous une pression de 8.10⁻³ mbar (0,8 Pa) dans une atmosphère d'argon,
- la couche 6 à base de SnO₂ est déposée par pulvérisation réactive à l'aide d'une cible d'étain, sous une pression de 3.10⁻³ mbar (0,3 Pa) et dans une atmosphère argon/oxygène dont 60 % volumique d'oxygène,
- les couches 2 et 3 à base de Nb₂O₅ et de ZnO sont déposées par pulvérisation réactive à l'aide respectivement d'une cible de niobium et d'une cible de zinc, sous une pression de 3.10⁻³ mbar (0,3 Pa) et dans une atmosphère argon/oxygène dont environ 60 % volumique d'oxygène, pour le dépôt de ZnO et 25 % pour le dépôt de Nb₂O₅.
- la couche 5 à base de Nb est déposée à l'aide d'une cible en niobium,sous une pression de 8.10⁻³ mbar (0,8 Pa) et dans une atmosphère d'argon.

Les densités de puissance et les vitesses de défilement du substrat sont ajustées de manière connue pour obtenir les épaisseurs de couche voulues.

Les exemples 1 à 4 sont réalisés conformément à l'invention, avec des empilements tels qu'illustrés à la figure 1. Les exemples suivants 5 à 8, sont des exemples comparatifs, ils sont dépourvus de la séquence Nb₂O₅/ZnO sous la couche d'argent et vont permettre de souligner les avantages liés à l'invention.

Le tableau 1 ci-dessous indique, en nanomètres, les épaisseurs des couches impliquées dans les empilements selon les exemples 1 à 6 :

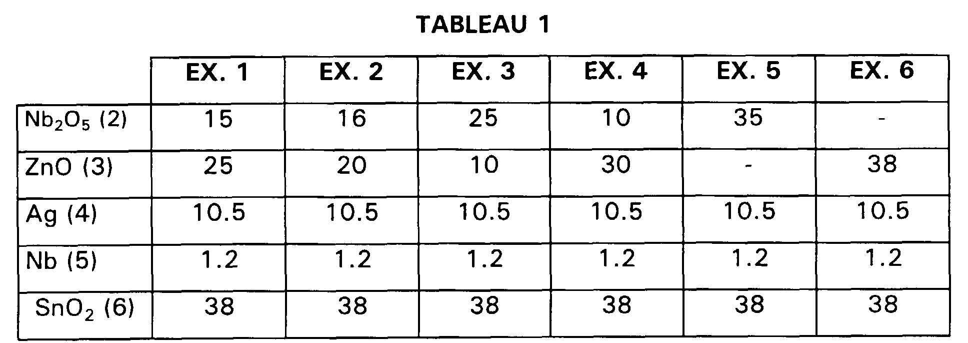

Les derniers exemples comparatifs 7 et 8 diffèrent des précédents par le type de la séquence de couches interposées entre le verre 1 et la couche d'argent 4 :

### EXEMPLE 7

La séquence de couches est la suivante :

| | |
|---|---|
| verre (1) | 4 mm |
| SnO₂ | 38 nm |
| Ag (4) | 10,5 nm |
| Nb (5) | 1,2 nm |
| SnO₂ (6) | 38 nm. |

### EXEMPLE 8

II préconise une couche de ZnO (3) sous la couche d'argent, mais déposée sur un oxyde différent de l'oxyde de niobium ou de tantale préconisé dans l'invention.

La séquence selon cet exemple est la suivante :

| | |
|---|---|
| verre (1) | 4 mm |
| SnO₂ | 28 nm |
| ZnO (3) | 10 nm |
| Ag (4) | 10,5 nm |
| Nb (5) | 1,2 nm |
| SnO₂ (6) | 38 nm. |

Chacun des 8 substrats ainsi revêtus est ensuite monté en double-vitrage à l'aide d'un autre substrat en verre similaire (silico-sodo-calcique de 4 mm d'épaisseur) séparé du premier par une lame de gaz, ici de l'argon, de 15 millimètres d'épaisseur.

Le tableau 2 ci-dessous indique, pour les exemples 1 à 4, la valeur de transmission lumineuse T_{L} en pourcentage, (mesurée d'après l'illuminant D₆₅) la valeur de facteur solaire FS (sans unité, et qui correspond au rapport de l'énergie totale traversant le vitrage sur l'énergie solaire incidente), la valeur de transmission thermique surfacique appelée facteur K et exprimée en W/m².K, la valeurd'émissivité ε sans unité, et les valeurs a* et b* de la coloration en réflexion selon le système de colorimétrie (L, a*, b*).

**TABLEAU 2**

| **Exemple** | **T**_{**L**} | **FS** | **K** | ε | **a*** | **b*** |
|---|---|---|---|---|---|---|
| 1 | 81.1 | 0.62 | 1.13 | 0.043 | 1.8 | -3.8 |
| 2 | 80.3 | - | 1.14 | 0.045 | -0.25 | -2.4 |
| 3 | 80.3 | - | 1.14 | 0.046 | -0.6 | -2.4 |
| 4 | 80.1 | - | 1.13 | 0.042 | -0.4 | -4.9 |

Le tableau 3 ci-dessous regroupe maintenant les valeurs de transmission lumineuse T_{L} et d'émissivité ε des double-vitrages selon tous les exemples comparatifs 5 à 8, ainsi que pour l'exemple 1 selon l'invention, pour mémoire :

**TABLEAU 3**

| **EXEMPLES** | **TL** | ε |
|---|---|---|
| 1 | 81.1 | 0.043 |
| 5 | 78.5 | 0.062 |
| 6 | 79.2 | 0.060 |
| 7 | 77.5 | 0.077 |
| 8 | 79.7 | 0.053 |

### EXEMPLE 9

Cet exemple est conforme à l'invention. Il est proche des exemples 1 à 3 précédents, à la différence près qu'il ajoute une couche additionnelle de SnO₂ entre le verre (1) et la séquence Nb₂O₅(2)/ZnO(3) de l'invention. Le tableau 4 ci-dessous indique les épaisseurs des couches de l'empilement en nm :

**TABLEAU 4**

| **VERRE (1)** | **EXEMPLE 9** |
|---|---|
| SnO₂ | 20 |
| Nb₂O₅ (2) | 8 |
| ZnO (3) | 12 |
| Ag (4) | 10 |
| Nb (5) | 1 |
| SnO₂ | 40 |

Le tableau 5 ci-dessous regroupe pour ce substrat, monté en double-vitrage comme les substrats des exemples précédents, les valeurs de T_{L}, FS, K, ε, a* et b* explicités plus haut :

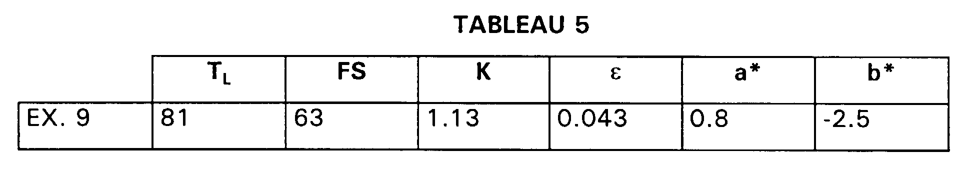

Des tests de résistance chimique, notamment de résistance à l'attaque acide, ont montré que tous les exemples 1 à 4 → et 10 selon l'invention présentaient une durabilité satisfaisante.

L'état de surface des couches d'argent de certains de ces exemples a été analysé par microscopie à force atomique (en reproduisant une seconde fois les empilements mais seulement « jusqu 'à » la couche d'argent, sans poursuivre les dépôts des couches suivantes). On a ainsi pu évaluer leur rugosité, mesurée par la valeur de l'écart quadratique moyen (dit « Root Mean Square » ou RMS en anglais), sur une surface de un micromètre et exprimée en angstroëms :
- la couche d'argent selon l'exemple 2, c'est-à-dire déposée sur la séquence d'oxydes Nb₂O₅/ZnO est d'une rugosité RMS de 7 angstroëms,
- la couche d'argent selon l'exemple 8, c'est-à-dire déposée sur la séquence d'oxydes SnO₂/ZnO est d'une rugosité RMS de 25 angstroëms,
- la couche d'argent selon l'exemple 7, c'est-à-dire déposée sur une unique couche de SnO₂ est d'une rugosité RMS de 30 angstroëms,
- la couche d'argent selon l'exemple 5, c'est-à-dire déposée sur une unique couche de Nb₂O₅ est d'une rugosité RMS de 20 angstroëms,
- la couche d'argent selon l'exemple 6, c'est-à-dire déposée sur une unique couche de ZnO est d'une rugosité RMS de 27 angstroëms.

Une analyse par spectroscopie par rayons X a également été effectuée : l'analyse sur la couche d'argent selon l'exemple 2 présente deux pics très caractéristiques, le premier à 34,2 degrés correspondant au pic de cristallisation du ZnO, le second à 38,25 degrés, nettement plus haut et correspondant au pic de cristallisation de l'argent.

La même analyse faite sur les couches d'argent des exemples 5 et 6 donne un résultat très différent : le ZnO de l'exemple 6 est quasiment amorphe (pas véritablement de pic), et la couche d'argent présente un pseudo-pic 20 fois moins élevé que dans le cas de l'exemple 2. Pour l'exemple 6, le « pic » de l'argent est complètement inexistant, indiscernable du « bruit de fond ».

Différentes remarques peuvent être faites au vu de ces résultats : Des tableaux 1 et 2, on voit que tous les exemples 1 à 4 et 9 selon l'invention permettent la fabrication de double-vitrages fonctionnels franchissant le seuil des 80 % de T_{L} tout en maintenant l'émissivité très basse, à une valeur inférieure à 0,050. En outre, la saturation c* (égale à la racine carrée de la somme des carrés de a* et b*) reste cantonnée à une valeur d'au plus 5. Une telle combinaison de performances optiques et thermiques est très avantageuse et étonnante, sachant que la couche d'argent a intrinsèquement un certain caractère absorbant tendant à diminuer la transmission lumineuse.

Du tableau 2, on peut aussi souligner la grande souplesse de mise en oeuvre de l'invention : puisque, selon l'invention, on subdivise le revêtement entre verre 1 et couche d'argent 4 en deux couches d'oxyde 2, 3, on peut ajuster/modifier l'épaisseur géométrique de chacune d'entre elles, même s'il est souhaitable de garder globalement pour l'ensemble de ces deux couches une épaisseur optique similaire (l'épaisseur optique est le produit de l'épaisseur géométrique d'une couche ou d'un ensemble de couches par les indices de réfraction des matériaux constitutifs de celles-ci). On remarque que les variations d'épaisseur de chacune des couches 2, 3 n'entraînent pas de variations très importantes dans les performances de l'empilement, ce qui est un atout.

Des tableaux 4 et 5, on vérifie que l'on conserve les effets avantageux de la séquence d'oxydes selon l'invention sous la couche d'argent, même en diminuant peu leurs épaisseurs et en ajoutant, pour compenser, une couche supplémentaire de SnO₂ sur le substrat, qui présente l'avantage d'une forte vitesse de dépôt et d'un coût modéré.

Peuvent être prises en compte les vitesses de dépôt relatives des oxydes des couches 2, 3 : si l'on privilégie de forts rendements de production, on peut notamment préférer déposer une couche 3 de ZnO un peu plus épaisse et une couche 2 en Nb₂O₅ un peu plus fine. (L'oxyde de zinc se dépose plus vite que l'oxyde de niobium).

Par contre, l'oxyde de niobium agit favorablement sur la colorimétrie, notamment, du vitrage, du fait de son indice de réfraction élevé. Tout est donc question de choix des critères et l'invention permet des optimisations très fines.

Des tableaux 2 et 3, on peut vérifier que seule la séquence Nb₂O₅ (ou Ta₂O₅)/ZnO permet un dépôt optimal de la couche d'argent, améliorant alors ses propriétés. Ainsi, les exemples 5 et 6 qui préconisent une unique couche respectivement en Nb₂O₅ ou en ZnO entre le verre 1 et la couche d'argent 4 conduisent à des valeurs d'émissivité significativement plus élevées et des valeurs de T_{L} significativement plus faibles, même si elles sont un peu meilleures que celle de l'exemple 7 n'insérant que du SnO₂ entre verre et argent.

Il y a donc bien un effet technique supplémentaire de mouillage que ne semble pas pouvoir réaliser une couche d'oxyde unique, quelle que soit la nature de l'oxyde.

L'exemple 8 se rapproche de l'enseignement du brevet cité précédemment FR-B-2 641 271, en ayant recours à une fine couche d'oxyde de zinc au-dessous de la couche d'argent. On constate qu'il ne parvient pas non plus à égaler les performances des exemples 1 à 4 selon l'invention. On peut noter à ce propos que les empilements selon l'invention utilisent des couches d'oxyde de zinc d'une épaisseur significative, sans cependant poser de problèmes particuliers de durabilité, ce qui renforce là encore l'idée d'une synergie entre les deux couches d'oxydes 2, 3, qui augmenterait peut être leur adhérence mutuelle, ce qui aurait pour conséquence de freiner la détérioration ou la délamination de l'oxyde de zinc.

Des résultats d'analyse par microscopie à force atomique et par spectroscopie RX confirment que seule la séquence d'oxydes selon l'invention sous la couche d'argent permet d'en améliorer la qualité, et ceci de deux manières : d'abord en la lissant, en la rendant beaucoup moins rugueuse, ensuite en favorisant sa cristallisation de manière extrêmement nette, qui semble en fait provoquée par la meilleure cristallisation de la couche d'oxyde zinc sur laquelle elle croît.

Par ailleurs, le choix d'une couche sacrificielle 4 spécifique n'est pas indifférent sur le plan optique, et sur le plan de la durabilité de l'empilement. Ainsi, la couche en Nb s'est révélée intéressante, dans la mesure où elle est un peu moins absorbante, par exemple, qu'un alliage du type nickel-chrome. Elle pénalise ainsi très peu l'empilement en termes de transmission lumineuse.

Il est possible de déposer en outre une fine couche à base de métal sous la couche d'argent, éventuellement pour en améliorer encore la croissance, mais surtout pour augmenter encore la durabilité de l'empilement. Elle ne s'avère pas indispensable, comme le montrent les bons résultats des empilements selon les exemples 1 à 4 et 9 qui en sont dépourvus. Cependant, elle peut effectivement avoir un effet bénéfique, notamment sur la résistance à la corrosion de l'empilement.

## Revendications

1. Substrat transparent (1), notamment en verre, muni d'un empilement de couches minces comportant au moins une couche (4) à propriétés dans l'infrarouge et/ou vis-à-vis du rayonnement solaire, notamment métallique et bas-émissive, disposée entre deux revêtements à base de matériau diélectrique, ***caractérisé en ce que*** le revêtement sous-jacent à la couche (4) à propriétés dans l'infrarouge comporte au moins un revêtement de mouillage qui est adjacent à ladite couche (4) et qui comprend une couche (3) à base d'oxyde de zinc déposée sur une couche (2) à base d'oxyde métallique de formule MₓO_{y} avec y/x ≥ 2,5, tel que l'oxyde de niobium, l'oxyde de tantale Ta₂O₅, l'oxyde de tungstène WO₃ et l'oxyde d'antimoine Sb₂O₅.

2. Substrat selon la revendication 1, ***caractérisé en ce que*** la couche (4) à propriétés dans l'infrarouge est à base d'argent.

3. Substrat selon l'une des revendications 1 ou 2, ***caractérisé en ce que*** la couche (3) à base d'oxyde de zinc est surmontée d'une fine couche à base de métal ou d'alliage métallique.

4. Substrat selon la revendication 3, ***caractérisé en ce que*** la fine couche à base de métal ou d'alliage métallique surmontant la couche (3) à base d'oxyde de zinc est en zinc, titane, tantale, étain ou alliage nickel-chrome, notamment d'une épaisseur comprise entre 0,2 et 2 nanomètres.

5. Substrat selon l'une des revendications précédentes, ***caractérisé en ce que*** la couche (4) à propriétés dans l'infrarouge est recouverte d'une couche (5) sacrificielle à base de métal tel que le niobium, le titane, le tantale ou d'alliage métallique tel que du nickel-chrome, du tantale-chrome ou du niobium-chrome, notamment d'une épaisseur comprise entre 0,5 et 6 nanomètres.

6. Substrat selon l'une des revendications précédentes, ***caractérisé en ce que*** le revêtement à base de matériau diélectrique au-dessus de la couche (4) métallique à propriétés dans l'infrarouge comporte au moins une couche (6) mince d'oxyde métallique, choisie(s) dans le groupe de l'oxyde d'étain, l'oxyde de zinc, l'oxyde de niobium, l'oxyde de titane, l'oxyde de tantale et/ou une couche de nitrure de silicium.

7. Substrat selon l'une des revendications précédentes, ***caractérisé en ce que*** la couche (4) à propriétés dans l'infrarouge a une épaisseur comprise entre 7 et 13 nanomètres, de préférence entre 9 et 12 nanomètres.

8. Substrat selon l'une des revendications précédentes, ***caractérisé en ce que*** le revêtement (2, 3) sous-jacent à la couche (4) à propriétés dans l'infrarouge a une épaisseur totale comprise entre 20 et 55 nanomètres, de préférence entre 30 et 45 nanomètres.

9. Substrat selon l'une des revendications précédentes, ***caractérisé en ce que*** la couche (3) à base d'oxyde de zinc a une épaisseur comprise entre 3 et 40 nanomètres, de préférence entre 10 et 35 nanomètres et notamment supérieure à 15 nanomètres.

10. Substrat selon l'une des revendications précédentes, ***caractérisé en ce que*** la couche (2) à base d'oxyde de niobium ou de tantale a une épaisseur comprise entre 3 et 40 nanomètres, de préférence comprise entre 5 et 25 nanomètres, notamment supérieure à 10 nanomètres.

11. Substrat selon l'une des revendications précédentes, ***caractérisé en ce que*** le revêtement (5, 6) en matériau diélectrique au-dessus de la couche (4) métallique à propriétés dans l'infrarouge a une épaisseur totale comprise entre 20 et 55 nanomètres.

12. Substrat selon l'une des revendications précédentes, ***caractérisé en ce qu***'***il*** est muni d'un empilement de couches minces comportant deux couches (4) métalliques à propriétés dans l'infrarouge.

13. Substrat transparent (1) selon l'une des revendications précédentes, ***caractérisé en ce que*** la couche (4) à propriétés dans l'infrarouge est recouverte d'une couche (5) sacrificielle à base du métal ou de l'alliage métal choisi parmi le niobium, le tantale-chrome et le niobium-chrome.

14. Substrat transparent (1) selon la revendication 5 ou la revendication 13, ***caractérisé en ce que*** la couche (5) sacrificielle est partiellement oxydée.

15. Substrat transparent (1) selon la revendication 5 ou la revendication 13, ***caractérisé en ce que*** la couche (5) sacrificielle est complètement oxydée.

16. Vitrage multiple bas-émissif, ***caractérisé en ce qu'il*** incorpore au moins un substrat selon l'une des revendications précédentes, notamment sous la forme d'un double-vitrage avec des empilements de couches en faces 3 et/ou 2 ou sous la forme d'un vitrage triple avec des empilements de couches en faces 3 et/ou 5.

17. Double-vitrage bas-émissif, ***caractérisé en ce qu***'***il*** incorpore un substrat selon l'une des revendications 1 à 15 ***et en ce qu'il*** présente une émissivité inférieure ou égale à 0,05, notamment inférieure à 0,045.

18. Double-vitrage bas-émissif, ***caractérisé en ce qu'il*** incorpore un substrat selon l'une des revendications 1 à 15 ***et en ce qu'il*** présente une transmission lumineuse T_{L} supérieure ou égale à 80%.

19. Vitrage feuilleté, ***caractérisé en ce qu'il*** incorpore au moins un substrat selon l'une des revendications 1 à 15 ***et en ce qu***'***il*** est soit anti-solaire, soit chauffant si l'on prévoit des amenées de courant pour la (les) couche(s) à propriétés dans l'infrarouge.

20. Utilisation du substrat selon l'une des revendications 1 à 15 à la fabrication de vitrages multiples du type isolants et bas-émissifs ou de vitrages feuilletés du type anti-solaires ou chauffants.

## Patentansprüche

1. Transparentes Substrat (1), welches insbesondere aus Glas besteht und mit einem Aufbau aus dünnen Schichten versehen ist, der wenigstens eine speziell metallische und niedrig emittierende Schicht (4) mit Eigenschaften im Infrarot und/oder gegenüber Sonneneinstrahlung umfaßt, die zwischen zwei Beschichtungen auf der Basis von dielektrischem Material angeordnet ist, **dadurch gekennzeichnet, daß** die unter der Schicht (4) mit Eigenschaften im Infrarot liegende Beschichtung mindestens eine Haftbeschichtung enthält, welche an diese Schicht (4) angrenzt und eine Schicht (3) auf der Basis von Zinkoxid enthält, die auf einer Schicht (2) auf der Basis von Metalloxid mit der Formel MₓO_{y} mit y/x ≥ 2,5 wie Nioboxid, Tantaloxid, Ta₂O₅, Wolframoxid, WO₃, und Antimonoxid, Sb₂O₅, aufgebracht ist.

2. Substrat nach Anspruch 1, **dadurch gekennzeichnet, daß** die Schicht (4) mit Eigenschaften im Infrarot auf der Basis von Silber ist.

3. Substrat nach Anspruch 1 oder 2, **dadurch gekennzeichnet, daß** die Schicht (3) auf der Basis von Zinkoxid mit einer feinen Schicht auf der Basis eines Metalls oder einer Metallegierung bedeckt ist.

4. Substrat nach Anspruch 3, **dadurch gekennzeichnet, daß** die feine Schicht auf der Basis eines Metalls oder einer Metallegierung, welche die Schicht (3) auf der Basis von Zinkoxid bedeckt, aus Zink, Titan, Tantal, Zinn oder Nickelchromlegierung besteht und insbesondere eine Dicke von 0,2 bis 2 Nanometern besitzt.

5. Substrat nach einem der vorhergehenden Ansprüche, **dadurch gekennzeichnet, daß** die Schicht (4) mit Eigenschaften im Infrarot mit einer Getterschicht (5) auf der Basis eines Metalls wie Niob, Titan und Tantal oder einer Metallegierung wie Nickelchrom, Tantalchrom oder Niobchrom mit insbesondere einer Dicke von 0,5 bis 6 Nanometern bedeckt ist.

6. Substrat nach einem der vorhergehenden Ansprüche, **dadurch gekennzeichnet, daß** die über der Metallschicht (4) mit Eigenschaften im Infrarot befindliche Beschichtung auf der Basis eines dielektrischen Materials mindestens eine dünne Schicht (6) enthält, die aus einem Metalloxid, das aus der Gruppe von Zinnoxid, Zinkoxid, Nioboxid, Titanoxid und Tantaloxid ausgewählt ist, und/oder einer Siliciumnitridschicht besteht.

7. Substrat nach einem der vorhergehenden Ansprüche, **dadurch gekennzeichnet, daß** die Dicke der Schicht (4) mit Eigenschaften im Infrarot 7 bis 13 Nanometer und vorzugsweise 9 bis 12 Nanometer beträgt.

8. Substrat nach einem der vorhergehenden Ansprüche, **dadurch gekennzeichnet, daß** die Gesamtdicke der unter der Schicht (4) mit Eigenschaften im Infrarot liegenden Beschichtung (2, 3) 20 bis 55 Nanometer und vorzugsweise 30 bis 45 Nanometer beträgt.

9. Substrat nach einem der vorhergehenden Ansprüche, **dadurch gekennzeichnet, daß** die Dicke der Schicht (3) auf der Basis von Zinkoxid 3 bis 40 Nanometer, vorzugsweise 10 bis 35 Nanometer und insbesondere mehr als 15 Nanometer beträgt.

10. Substrat nach einem der vorhergehenden Ansprüche, **dadurch gekennzeichnet, daß** die Dicke der Schicht (2) auf der Basis von Niob- oder Tantaloxid 3 bis 40 Nanometer, vorzugsweise 5 bis 25 Nanometer und insbesondere mehr als 10 Nanometer beträgt.

11. Substrat nach einem der vorhergehenden Ansprüche, **dadurch gekennzeichnet, daß** die Gesamtdicke der über der Metallschicht (4) mit Eigenschaften im Infrarot liegenden Beschichtung (5, 6) aus dielektrischem Material 20 bis 55 Nanometer beträgt.

12. Substrat nach einem der vorhergehenden Ansprüche, **dadurch gekennzeichnet, daß** es mit einem Aufbau aus dünnen Schichten versehen ist, der zwei Metallschichten (4) mit Eigenschaften im Infrarot enthält.

13. Transparentes Substrat (1) nach einem der vorhergehenden Ansprüche, **dadurch gekennzeichnet, daß** die Schicht (4) mit Eigenschaften im Infrarot mit einer Getterschicht (5) auf der Basis eines Metalls oder einer Metallegierung bedeckt ist, das/die aus Niob, Tantalchrom und Niobchrom ausgewählt ist.

14. Transparentes Substrat (1) nach Anspruch 5 oder 13, **dadurch gekennzeichnet, daß** die Getterschicht (5) teilweise oxidiert ist.

15. Transparentes Substrat (1) nach Anspruch 5 oder 13, **dadurch gekennzeichnet, daß** die Getterschicht (5) vollständig oxidiert ist.

16. Niedrig emittierende Mehrfachverglasung, **dadurch gekennzeichnet, daß** sie mindestens ein Substrat nach einem der vorhergehenden Ansprüche, insbesondere in Form einer Zweifachverglasung mit Schichtaufbauten auf Position 3 und/oder 2 bzw. in Form einer Dreifachverglasung mit Schichtaufbauten auf Position 3 und/oder 5, umfaßt.

17. Niedrig emittierende Zweifachverglasung, **dadurch gekennzeichnet, daß** sie ein Substrat nach einem der Ansprüche 1 bis 15 umfaßt **und daß** sie ein Emissionsvermögen von kleiner oder gleich 0,05 und insbesondere von kleiner als 0,045 aufweist.

18. Niedrig emittierende Zweifachverglasung, **dadurch gekennzeichnet, daß** sie ein Substrat nach einem der Ansprüche 1 bis 15 umfaßt **und daß** sie einen Lichttransmissionsgrad T_{L} von größer oder gleich 80 % aufweist.

19. Verbundverglasung, **dadurch gekennzeichnet, daß** sie mindestens ein Substrat nach einem der Ansprüche 1 bis 15 umfaßt **und daß** sie entweder eine Sonnenschutzverglasung oder, wenn für die Schicht/en mit Eigenschaften im Infrarot Stromzuführungen vorgesehen werden, beheizbar ist.

20. Verwendung des Substrats nach einem der Ansprüche 1 bis 15 zur Herstellung von Mehrfachverglasungen vom Typ von niedrig emittierenden und Isolierverglasungen oder von Verbundverglasungen vom Typ von Sonnenschutzverglasungen oder beheizbaren Verglasungen.

## Claims

1. Transparent substrate (1), notably made from glass, provided with a stack of thin layers including at least one film (4) with properties in the infrared region and/or vis-à-vis solar radiation, notably metallic and low emission, disposed between two coatings based on dielectric material, characterised in that the coating subjacent to the film (4) with properties in the infrared region has at least one wetting coating which is adjacent to the said film (4) and which comprises a film (3) based on zinc oxide deposited on a film (2) based on metallic oxide of formula MₓO_{y} with y/x ≥ 2.5, such as niobium oxide, tantalum oxide Ta₂O₅, tungsten oxide WO₃ and antimony oxide Sb₂O₅.

2. Substrate according to Claim 1, characterised in that the film (4) with properties in the infrared region is based on silver.

3. Substrate according to one of Claims 1 or 2, characterised in that the film (3) based on zinc oxide is surmounted by a fine film based on metal or metallic alloy.

4. Substrate according to Claim 3, characterised in that the fine film based on metal or metallic alloy surmounting the film (3) based on zinc oxide is made from zinc, titanium, tantalum, tin or nickel-chromium alloy, notably with a thickness of between 0.2 and 2 nanometres.

5. Substrate according to one of the preceding claims, characterised in that the film (4) with properties in the infrared region is covered with a sacrificial film (5) based on a metal such as niobium, titanium, tantalum or a metallic alloy such as nickel-chromium, tantalum-chromium or niobium-chromium, notably with a thickness of between 0.5 and 6 nanometres.

6. Substrate according to one of the preceding claims, characterised in that the coating based on dielectric material above the metallic film (4) with properties in the infrared region includes at least one thin film (6) of metallic oxide, chosen from the group including tin oxide, zinc oxide, niobium oxide, titanium oxide, tantalum oxide and/or a silicon nitride film.

7. Substrate according to one of the preceding claims, characterised in that the film (4) with properties in the infrared region has a thickness of between 7 and 13 nanometres, preferably between 9 and 12 nanometres.

8. Substrate according to one of the preceding claims, characterised in that the coating (2, 3) subjacent to the film (4) with properties in the infrared region has a total thickness of between 20 and 55 nanometres, preferably between 30 and 45 nanometres.

9. Substrate according to one of the preceding claims, characterised in that the film (3) based on zinc oxide has a thickness of between 3 and 40 nanometres, preferably between 10 and 35 nanometres and notably greater than 15 nanometres.

10. Substrate according to one of the preceding claims, characterised in that the film (2) based on niobium oxide or tantalum oxide has a thickness of between 3 and 40 nanometres, preferably between 5 and 25 nanometres, notably greater than 10 nanometres.

11. Substrate according to one of the preceding claims, characterised in that the coating (5, 6) made of dielectric material above the metallic film (4) with properties in the infrared region has a total thickness of between 20 and 55 nanometres.

12. Substrate according to one of the preceding claims, characterised in that it is provided with a stack of thin layers including two metallic layers (4) with properties in the infrared region.

13. Transparent substrate (1) according to one of the preceding claims, characterised in that the film (4) with properties in the infrared region is covered with a sacrificial film (5) based on metal or metal alloy chosen from amongst niobium, tantalum-chromium and niobium-chromium.

14. Transparent substrate (1) according to Claim 5 or Claim 13, characterised in that the sacrificial film (5) is partially oxidised.

15. Transparent substrate (1) according to Claim 5 or Claim 13, characterised in that the sacrificial film (5) is completely oxidised.

16. Multiple low-emission glazing pane, characterised in that it incorporates at least one substrate according to one of the preceding claims, notably in the form of a double glazing with stacks of layers on faces 3 and/or 2 or in the form of a triple glazing with stacks of layers on faces 3 and/or 5.

17. Low-emission double glazing, characterised in that it incorporates a substrate according to one of Claims 1 to 15 and in that it has an emisivity of less than or equal to 0.05, notably less than 0.045.

18. Low-emission double glazing, characterised in that it incorporates a substrate according to one of Claims 1 to 15 and in that it has a light transmission T_{L} greater than or equal to 80%.

19. Laminated glass pane, characterised in that it incorporates at least one substrate according to one of Claims 1 to 15 and in that it is either anti-solar, or heating if current feeds are provided for the film or layers with properties in the infrared region.

20. Use of the substrate according to one of Claims 1 to 15 for the manufacture of multiple glazing of the insulating and low-emission type or laminated glass panes of the anti-solar or heating type.
